# EUROPEAN PATENT APPLICATION

(11) **EP 1 418 736 A1**
(43) Date of publication of application: **12.05.2004**
(21) Application number: 03025403.1
(22) Date of filing: 05.11.2003
(51) Int. Cl.: H04M 1/2745, H04M 1/725, H04M 3/42

(54) **Memory information backup method and system for cell phone**

(30) Priority: 08.11.2002 JP 2002326161
(71) Applicant: NEC CORPORATION, Tokyo (JP)
(72) Inventor: Yamagata, Hideo, Tokyo (JP)
(74) Representative: Glawe. Delfs. Moll

(57) **Abstract**

In a backup system which backs up memory information in a cell phone to a terminal by transmitting/receiving electronic mail, the terminal includes an instruction mail creating section and backup section. The instruction mail creating section creates, as backup instruction mail, electronic mail having information for instructing to perform backup stored in a header portion. The backup section analyzes the header portion of the received electronic mail. When detecting that the mail is backup response mail from the cell phone, the backup section decodes the text of the received backup response mail and backs up the text. The cell phone includes a response mail creating section which analyzes the header portion of the received electronic mail, creates, as backup response mail, electronic mail having a text in which the memory information in the cell phone is coded and written, when detecting that the mail is backup instruction mail from the terminal, and transmits the mail to the terminal. A backup method is also disclosed.

## Description

### Background of the Invention

The present invention relates to backup of memory information in a cell phone and, more particularly, to a backup method and system for memory information in a cell phone, which back up/restore information by using electronic mail.

Conventionally, as a backup method of this type, the method disclosed in Japanese Patent Laid-Open No. 2001-352584 (reference 1) has been proposed. According to this method, write and erase logs associated with mail transmission/reception and the like are monitored. When a predetermined transfer start condition is satisfied, user information such as telephone numbers and addresses written in the built-in memory of a cell phone is automatically uploaded (backed up) to a service station. The backup data is downloaded from the service station in accordance with a download request from the user.

In addition, Japanese Patent Laid-Open Nos. 2002-218091 (reference 2), 2001-177624 (reference 3), and 2002-111899 (reference 4) have proposed a backup method of backing up information such as telephone numbers from a cell phone to an external terminal and backing up information from the cell phone to a data center through a personal computer by using electronic mail. According to this backup method, information such as telephone numbers from a cell phone is converted into information in the CSV (Comma Separated Value) format or text format and transmitted to an external terminal or the like by electronic mail.

As information (memory information) that can be stored in a cell phone has increased in type and quantity every day, memory information has increased in importance. For this reason, a more significant loss occurs when important memory information is lost. In addition, malicious attempts to destroy, alter, and leak data have increased in degree of danger. Under the circumstances, demands have arisen for a memory information backup method with high safety and simplicity.

Most of conventional backup methods for cell phones are designed to back up memory information from a cell phone to a predetermined terminal or the like directly or through an intermediate management center or the like, posing problems in terms of security.

### Summary of the Invention

It is an object of the present invention to provide a backup method and system which can maintain the safety and reliability of the system by improving security.

It is another object of the present invention to provide a backup method and system which can monitor unauthorized use of memory information in a cell phone.

In order to achieve the above objects, according to the present invention, there is provided a backup system which backs up memory information in a cell phone to a terminal by transmitting/receiving electronic mail, wherein the terminal comprises instruction mail creating means for creating, as backup instruction mail, electronic mail having information for instructing to perform backup stored in a header portion, and backup means for analyzing the header portion of the received electronic mail, and when detecting that the mail is backup response mail from the cell phone, decoding a text of the received backup response mail and backing up the text, and the cell phone comprises response mail creating means for analyzing the header portion of the received electronic mail, creating, as backup response mail, electronic mail having a text in which the memory information in the cell phone is coded and written, when detecting that the mail is backup instruction mail from the terminal, and transmitting the mail to the terminal.

### Brief Description of the Drawings

Fig. 1 is a functional block diagram showing the backup operation of a memory information backup system for a cell phone according to the first embodiment of the present invention;
Fig. 2 is a functional block diagram showing the restore operation of the memory information backup system for the cell phone according to the first embodiment of the present invention;
Fig. 3 is a block diagram showing the arrangement of a terminal as a component of the system shown in Figs. 1 and 2;
Fig. 4 is a block diagram showing the arrangement of a cell phone as a component of the system shown in Figs. 1 and 2;
Fig. 5A is a view showing an example of the header portion and text data of electronic mail, and Fig. 5B is a view showing an example of an instruction content and authentication information to be added;
Fig. 6 is a flow chart showing backup instructing operation in the terminal in Figs. 1 and 3;
Fig. 7 is a flow chart showing backup operation in the cell phone in Figs. 1 and 4;
Fig. 8 is a flow chart showing backup response mail receiving operation in the terminal in Figs. 1 and 3;
Fig. 9 is a flow chart showing restore instructing operation in the terminal in Figs. 2 and 3;
Fig. 10 is a flow chart showing restore operation in the cell phone in Figs. 2 and 4;
Fig. 11 is a flow chart showing restore completion notification mail receiving operation in the terminal in Figs. 2 and 3; and
Figs. 12A and 12B are functional block diagrams showing the backup operation of a memory information backup system for a cell phone according to the second embodiment of the present invention.

### Description of the Preferred Embodiments

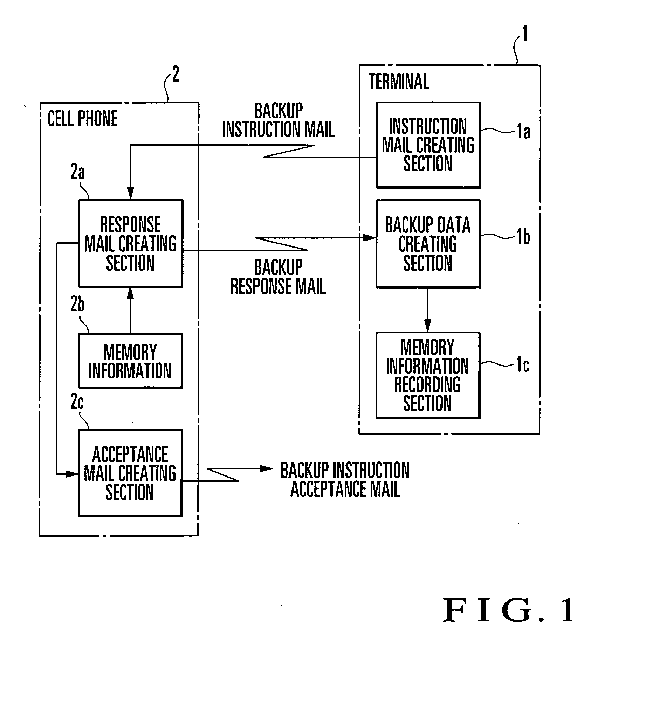

A memory information backup system for a cell phone according to the first embodiment of the present invention will be described with reference to Figs. 1 to 4. Fig. 1 shows backup operation in a backup system constituted by a terminal 1 formed from a personal computer (PC) and a cell phone 2 which backs up memory information 2b to the terminal 1 by using electronic mail. All data are transmitted and received by electronic mail between the terminal 1 and the cell phone 2.

The terminal 1 includes an instruction mail creating section 1a which creates backup instruction mail for instructing to transmit the memory information 2b stored in the cell phone 2 and transmitting the mail to the cell phone 2, a backup data creating section 1b which receives backup response mail containing the memory information 2b transmitted from the cell phone 2 and creates backup data of the memory information 2b contained in the backup response mail, and a memory information recording section 1c which records the created backup data of the memory information 2b on a recording means (to be described later). The backup data creating section 1b and memory information recording section 1c constitute a backup means.

The cell phone 2 includes a response mail creating section 2a which creates backup response mail containing the memory information 2b in response to backup instruction mail from the terminal 1 and transmits the mail to the terminal 1, and an acceptance mail creating section 2c serving as a notification means for creating backup instruction acceptance mail for notifying a predetermined destination of a backup processing result. The memory information 2b constituted by data such as an address book and phone directory (telephone numbers and destination addresses) is stored in a memory section (to be described later).

An outline of backup operation for the memory information 2b will be described next with reference to Fig. 1. The instruction mail creating section 1a of the terminal 1 creates backup instruction mail and transmits it to the cell phone 2. The response mail creating section 2a of the cell phone 2 creates backup response mail containing the memory information 2b in response to the received backup instruction mail, and transmits it to the terminal 1. The backup data creating section 1b of the terminal 1 extracts the memory information 2b from the received backup response mail. The memory information recording section 1c stores the extracted memory information 2b as backup data in a hard disk or the like.

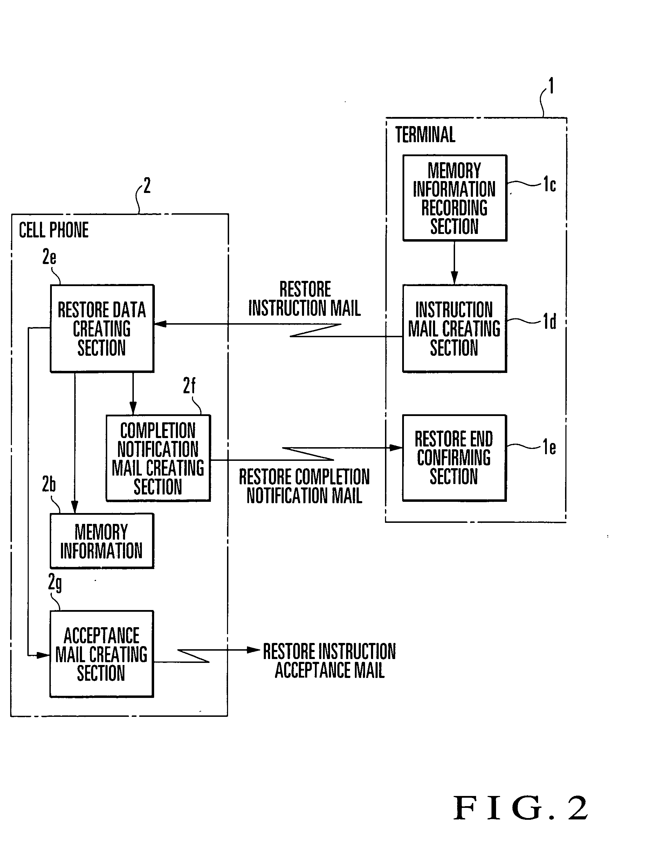

Fig. 2 shows restore operation in a backup system which restores the memory information stored on the terminal 1 side into the cell phone 2. The terminal 1 includes the memory information recording section 1c in which the memory information 2b is stored, an instruction mail creating section 1d which creates restore instruction mail containing the memory information 2b and transmits it to the cell phone 2, and a restore end confirming section 1e which receives restore completion notification mail from the cell phone 2 and confirms the end of restore.

The cell phone 2 includes a restore data creating section 2e which receives restore instruction mail from the terminal 1, extracts the memory information 2b from the restore instruction mail, and restores it into a memory section (to be described later), a completion notification mail creating section 2f which creates restore completion notification mail upon completion of restore in accordance with an instruction from the restore data creating section 2e, and an acceptance mail creating section 2g serving as a notification means for creating restore acceptance mail in accordance with an instruction from the restore data creating section 2e so as to notify a predetermined destination of a restore processing result.

An outline of restore operation for the memory information 2b will be described next with reference to Fig. 2. First of all, the instruction mail creating section 1d of the terminal 1 creates restore instruction mail (electronic mail) containing the memory information 2b backed up to the memory information recording section 1c, and transmits it to the cell phone 2. Note that the instruction mail creating section 1d may create restore instruction mail by selecting information, from the memory information 2b backed up to the memory information recording section 1c, which is to be restored into the cell phone 2, instead of transmitting all the backup information. The restore data creating section 2e of the cell phone 2 extracts memory information contained in the received restore instruction mail and restores it. When the restore operation is completed, the completion notification mail creating section 2f creates restore completion notification mail and transmits it to the terminal 1.

In either backup operation or restore operation for memory information, some means must be provided to monitor unauthorized use of the system, e.g., intrusion into the system, data destruction, and data alteration. For this purpose, upon acceptance of processing from the terminal 1, the acceptance mail creating sections 2c and 2g of the cell phone 2 notify a transmission destination registered in the cell phone 2 of backup instruction acceptance mail and restore instruction acceptance mail which contain processing contents such as reception and acceptance of instruction mail, transmission of response mail, mail transmission/reception dates, and transmission/reception counts. The notification destination registered in the cell phone 2 in advance may be any destination as long as it can be finally checked by an authorized user who has performed backup processing or restore processing, e.g., the owner/user of the cell phone 2 or terminal 1.

In order to authenticate the sender of instruction mail and check its validity, authentication information is attached to the header portion of electronic mail to be used in backup operation and restore operation. On the transmitting side, memory information is coded by a predetermined scheme at the time of transmission of electronic mail. On the receiving side, the memory information is decoded at the time of reception of the electronic mail, thereby preventing tapping and the like of mail. In the above manner, memory information in the cell phone can be backed up/restored with ease and safety without using any special hardware or the like.

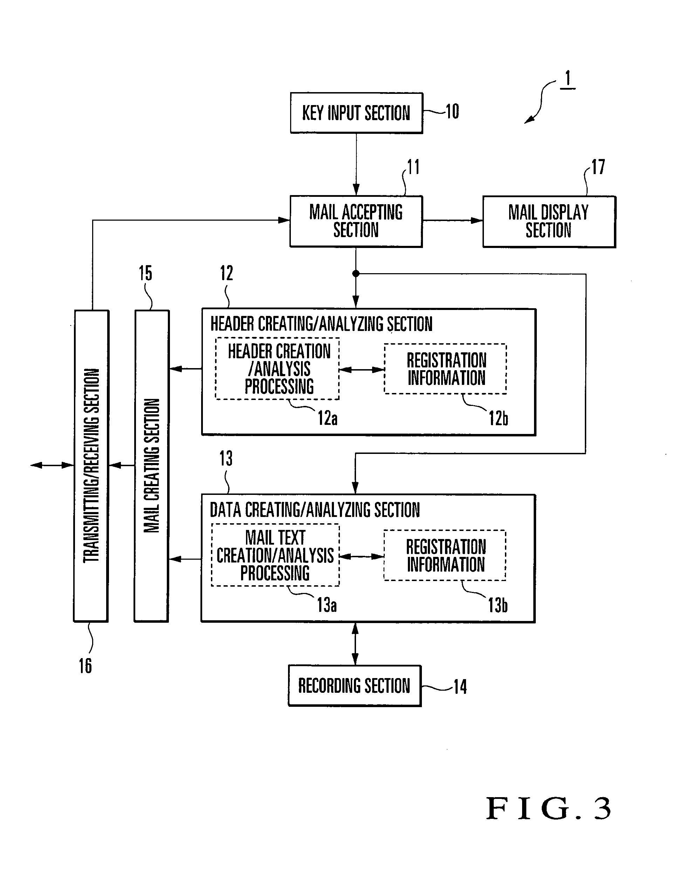

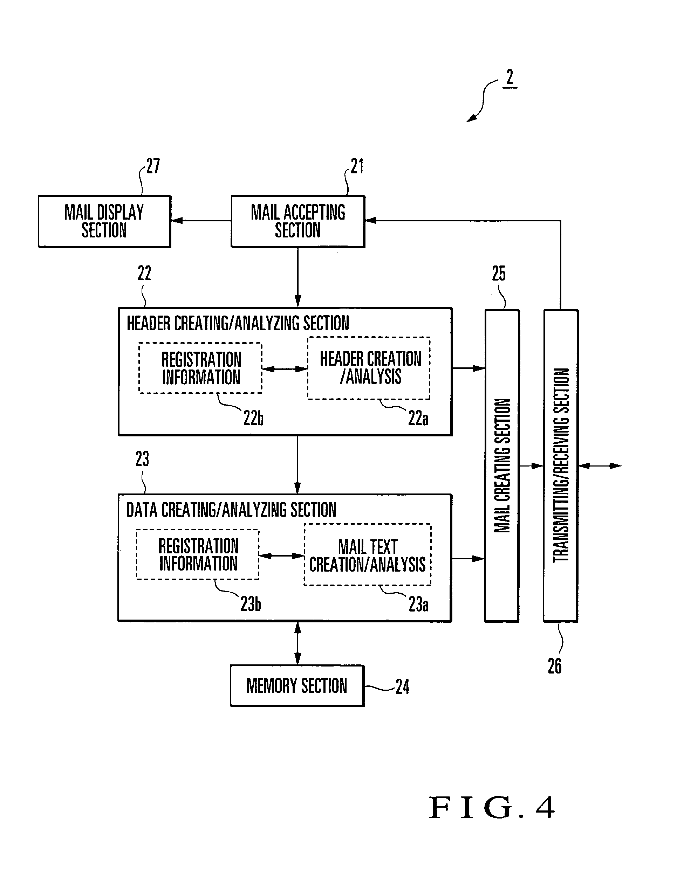

The detailed arrangement of the above backup system will be described next with reference to Figs. 3 and 4.

Referring to Fig. 3, the terminal 1 is comprised of a key input section 10 which instructs to transmit mail, a mail accepting section 11 which accepts electronic mail (backup response mail, restore completion notification mail, and backup/restore instruction acceptance mail) from the cell phone 2, a header creating/analyzing section 12 which performs header creation/analysis processing 12a for electronic mail in accordance with an instruction from the mail accepting section 11, a data creating/analyzing section 13 which performs mail text creation and analysis processing 13a for electronic mail in accordance with an instruction from the mail accepting section 11, a recording section 14 which records backup data of memory information output from the data creating/analyzing section 13, a mail creating section 15 which creates electronic mail (backup instruction mail and restore instruction mail) in accordance with outputs from the header creating/analyzing section 12 and data creating/analyzing section 13, a transmitting/receiving section 16 which transmits the electronic mail created by the mail creating section 15 and outputs received electronic mail to the mail accepting section 11, and a mail display section 17 which displays the electronic mail received by the mail accepting section 11.

The header creating/analyzing section 12 and data creating/analyzing section 13 respectively have pieces of registration information 13a and 13b which are registered in advance for authentication.

The mail accepting section 11 activates the header creating/analyzing section 12 and data creating/analyzing section 13 to create instruction mail to be transmitted to the cell phone 2 when detecting operation indicating an instruction mail transmission instruction from the key input section 10 of the terminal 1 or receiving response mail from the cell phone 2 which has been received by the transmitting/receiving section 16.

When the header creating/analyzing section 12 is activated by the mail accepting section 11 to transmit instruction mail to the cell phone 2, the section 12 creates information (intra-header information) to be contained in the header of instruction mail. Upon receiving response mail from the cell phone 2, the header creating/analyzing section 12 analyzes the information contained in the header of the received response mail and performs processing in accordance with authentication and the response content. In performing authentication processing, the header creating/analyzing section 12 creates authentication information to be contained in the header portion of electronic mail to be transmitted to the cell phone 2 on the basis of the registration information 12b. In addition, the header creating/analyzing section 12 performs authentication on the basis of the authentication information contained in electronic mail received from the cell phone 2 and the registration information 12b. That is, the header creating/analyzing section 12 has a function of creating and confirming authentication information for security management, performs personal identification, and checks the validity of an instruction/response on the basis of registration information and authentication information. The header creating/analyzing section 12 also performs instruction/response processing.

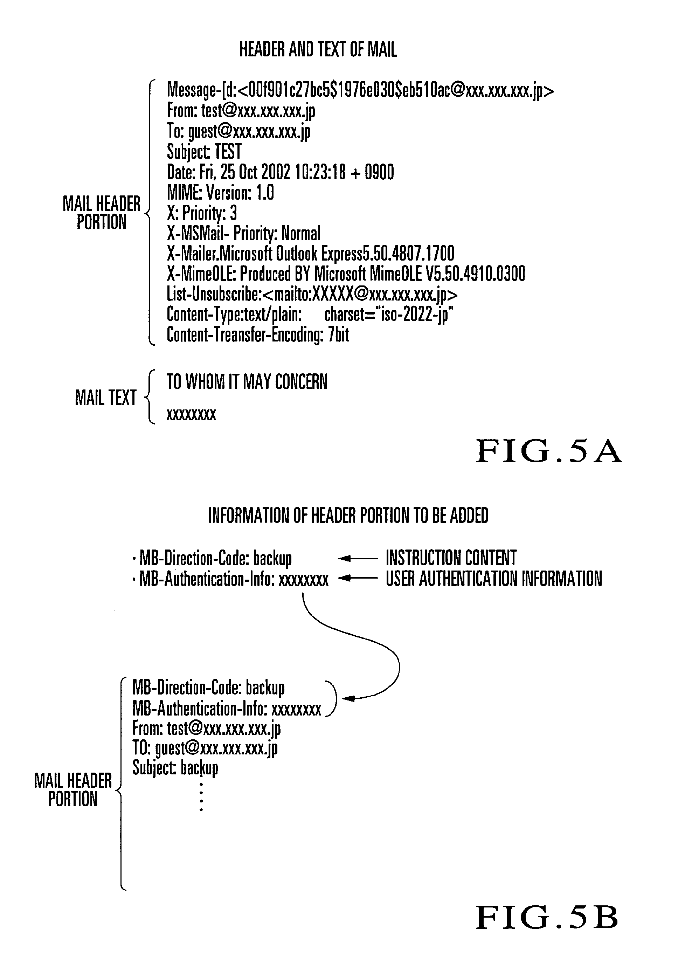

Figs. 5A and 5B show examples of the data format of electronic mail and authentication information. In general, as shown in Fig. 5A, a mail header portion is constituted by a message ID (Message-Id:), sender address (From:), transmission destination address (To:), subject (Subject:), date (Date:), and the like. In this embodiment, as shown in Fig. 5B, information (MB-Direction-Code: backup) of a backup instruction which is the content of an instruction to the terminal 1 and authentication information (MB-Authentication-Info: xxxxxxxx) are written before the sender address (From:).

Authentication information is written as a set of specific header information of electronic mail and personal identification information obtained by computing the header information according to a specific algorithm. For example, as specific header information, authentication information is set by writing, as personal identification information in an authentication item (Authentication-Info:), information for specifying a character string in a predetermined item in the header portion (e.g., information specifying the character string <Fri. 25 Oct ...... +0900> written below Date:) and a numerical value obtained by regarding the character codes of information (character string) as numerical values and performing an arithmetic operation for them according to a predetermined algorithm (e.g., modulo-2n (n is an integer equal to or more than 2) arithmetic operation for the sum of the respective character codes of the character string x a predetermined numerical value).

When such authentication information is to be used, the terminal 1 performs an arithmetic operation for a character string at the time of transmission of instruction mail according to an algorithm set in advance between itself and the cell phone 2, and inserts the resultant information as personal identification information (numerical value) in the header portion. Upon receiving the instruction mail, the cell phone 2 extracts authentication information from the header portion of the mail, and extracts information such as an identical character string. The cell phone 2 then performs an arithmetic operation based on the same algorithm, and detects coincidence with the authentication information (numerical value) of the instruction mail, thereby performing authentication.

The data creating/analyzing section 13 codes/decodes memory information based on the pre-registered registration information 13b, i.e., codes transmission data corresponding to an electronic mail text or the like and decodes reception data. The registration information contains key information for coding/decoding.

The mail creating section 15 writes the intra-header information created by the header creating/analyzing section 12 in the header portion of electronic mail, and writes the data created by the data creating/analyzing section 13 as data in the electronic mail text. The mail creating section 15 then outputs the resultant mail as backup instruction mail to the transmitting/receiving section 16. The transmitting/receiving section 16 transmits the backup instruction mail created by the mail creating section 15 to the cell phone 2, and outputs to the mail accepting section 11 response mail received from the cell phone 2. The mail display section 17 displays backup response mail, restore completion notification mail, backup instruction acceptance mail, and restore instruction acceptance mail received from the cell phone 2.

Referring to Fig. 4, the cell phone 2 is comprised of a mail accepting section 21 which accepts electronic mail (backup instruction mail and restore instruction mail) from the terminal 1, a header creating/analyzing section 22 which creates and analyzes the header of electronic mail in accordance with instructions and the like from the mail accepting section 21, data creating/analyzing section 23 which performs mail text creation/analysis processing 23b in accordance with instructions and the like from the header creating/analyzing section 22, a memory section 24 which records memory information and the like, a mail creating section 25 which creates electronic mail on the basis of outputs from the header creating/analyzing section 22 and data creating/analyzing section 23, a transmitting/receiving section 26 which transmits electronic mail created by the mail creating section 25 and outputs received electronic mail to the mail accepting section 21, and a mail display section 27 which displays the electronic mail accepted by the mail accepting section 21.

The mail accepting section 21 activates the header creating/analyzing section 22 and data creating/analyzing section 23 in response to electronic mail received from the terminal 1 through the transmitting/receiving section 26.

The header creating/analyzing section 22 detects and authenticates the contents of an instruction by analyzing the intra-header information of instruction mail or the like. The header creating/analyzing section 22 also creates intra-header information of response mail. That is, the header creating/analyzing section 22 is activated by the mail accepting section 21 to analyze the intra-header information written in the header of electronic mail. Upon detecting that the electronic mail is instruction mail, the header creating/analyzing section 22 performs authentication on the basis of the authentication information contained in the instruction mail, and checks the validity of the instruction/response. If personal identification is done, the header creating/analyzing section 22 creates, on the basis of the registration information, intra-header (response) information and authentication information to be attached to response mail to be transmitted to the terminal 1. In this case, as shown in Fig. 5B, a backup can be used as response information, and specific header information and personal identification information can be used as authentication information.

The data creating/analyzing section 23 decodes the text of reception mail on the basis of pre-registered registration information in accordance with the analysis result obtained by the header creating/analyzing section 22, and codes memory information.

The mail creating section 25 writes the intra-header information created by the header creating/analyzing section 22 in the header of electronic mail, and writes the data created by the data creating/analyzing section 23 as data in the electronic mail text. The mail creating section 25 then outputs the resultant mail as backup response mail to the transmitting/receiving section 26. The transmitting/receiving section 26 outputs instruction mail received from the terminal 1 to the mail accepting section 11, and transmits the backup response mail created by the mail creating section 25 to the cell phone 2. The mail display section 27 displays electronic mail (backup instruction mail and restore instruction mail) received from the terminal 1.

The relationship between the functional blocks shown in Figs. 1 and 2 and the block elements shown in Figs. 3 and 4 will be described next. Referring to Fig. 1, the instruction mail creating section 1a of the terminal 1 is comprised of the key input section 10, mail accepting section 11, header creating/analyzing section 12, data creating/analyzing section 13, and mail creating section 15. The backup data creating section 1b is comprised of the mail accepting section 11, header creating/analyzing section 12, and data creating/analyzing section 13. The memory information recording section 1c is comprised of the data creating/analyzing section 13 and recording section 14. The response mail creating section 2a and acceptance mail creating section 2c of the cell phone 2 are comprised of the header creating/analyzing section 22, data creating/analyzing section 23, and mail creating section 25.

Referring to Fig. 2, the instruction mail creating section 1d of the terminal 1 is comprised of the key input section 10, mail accepting section 11, header creating/analyzing section 12, data creating/analyzing section 13, and mail creating section 15. The restore end confirming section 1e is comprised of the mail accepting section 11, header creating/analyzing section 12, and mail display section 17. The restore data creating section 2e of the cell phone 2 is comprised of the mail accepting section 21, header creating/analyzing section 22, data creating/analyzing section 23, and mail creating section 25. The completion notification mail creating section 2f and acceptance mail creating section 2g are comprised of the header creating/analyzing section 22, data creating/analyzing section 23, and mail creating section 25.

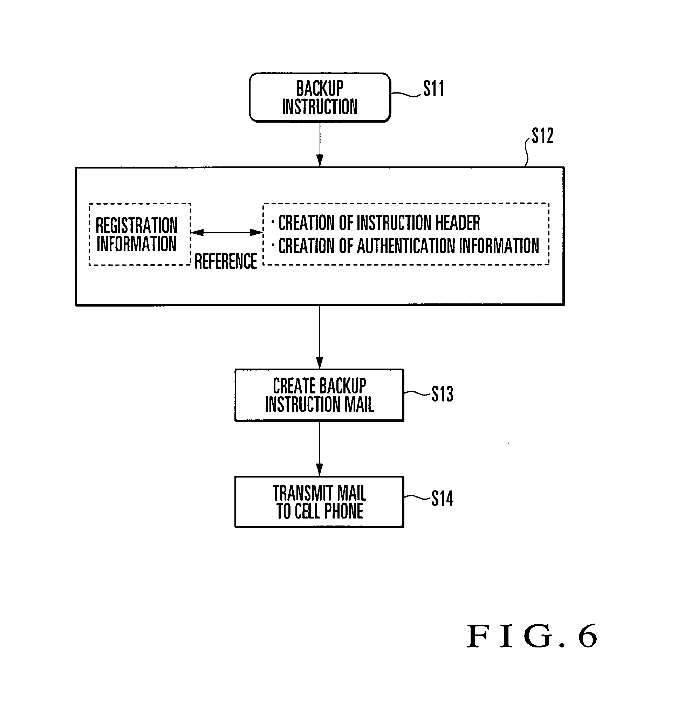

A case wherein the memory information recorded on the memory section 24 of the cell phone 2 is backed up to the hard disk of the terminal 1 or the like will be described in detail next with reference to Figs. 6 to 8.

### <Backup of Memory Information>

Backup instructing operation of the terminal 1 will be described first with reference to Fig. 6. When the user operates the key input section 10 of the terminal 1 to issue a backup instruction for memory information in the cell phone 2 (step S11), the mail accepting section 11 activates the header creating/analyzing section 12 upon accepting the backup instruction. The header creating/analyzing section 12 creates a backup instruction and authentication information as intra-header information by referring to the registration information 12b (step S12).

Note that if a mail text is required in issuing a backup instruction, the mail accepting section 11 activates the data creating/analyzing section 13 as well. The mail creating section 15 creates backup instruction mail from the intra-header information output from the header creating/analyzing section 12 (step S13). The mail creating section 15 transmits the mail output from the mail creating section 15 to the cell phone 2 (step S14).

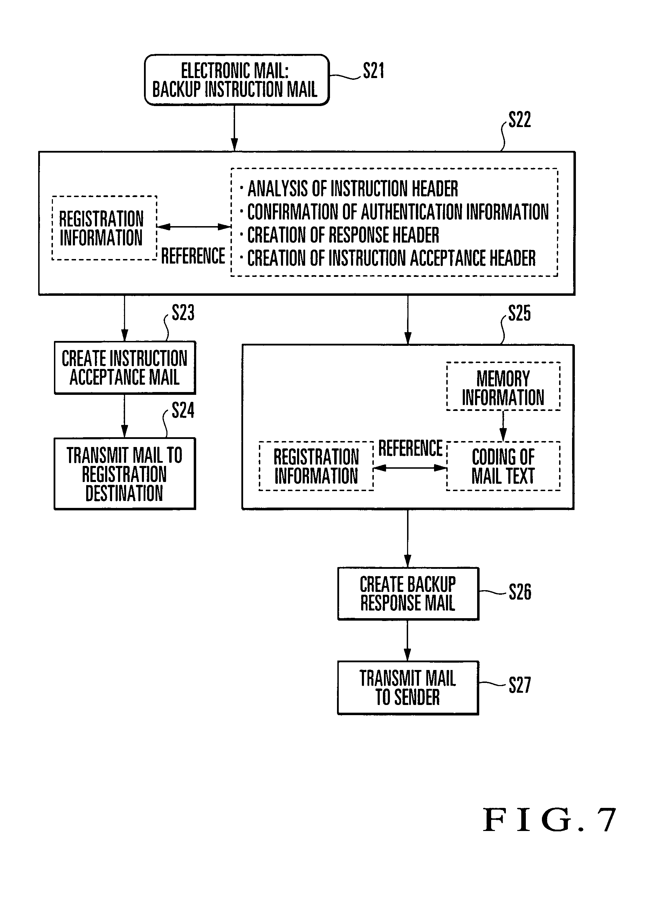

The backup operation of the cell phone 2 will be described next with reference to Fig. 7. Upon receiving electronic mail through the transmitting/receiving section 26 (step S21), the cell phone 2 transfers the mail to the mail accepting section 21. Upon accepting the electronic mail, the mail accepting section 21 activates the header creating/analyzing section 22 and data creating/analyzing section 23.

The header creating/analyzing section 22 analyzes the header portion of the electronic mail. Upon detecting, as a result of this analysis, that this mail is instruction mail having an instruction header for instructing to back up the memory information stored in the memory section 24 of the cell phone 2, the header creating/analyzing section 22 checks, on the basis of the authentication information in the header portion of the mail, the validity of a person who has issued the instruction, thereby performing authentication. When personal identification is done by authentication, the header creating/analyzing section 22 creates intra-header information (response header) of backup response mail by referring to registration information 22b. The header creating/analyzing section 22 also creates intra-header information (instruction acceptance header) of backup instruction acceptance mail indicating the acceptance of the backup instruction (step S22), and instructs the data creating/analyzing section 23 to create the text of response mail.

Upon receiving an instruction to create the text of the backup response mail, the data creating/analyzing section 23 reads out memory information from the memory section 24, and codes the memory information in accordance with the pre-registered registration information (step S25).

The mail creating section 25 writes the intra-header information in the header portion of the response mail created by the header creating/analyzing section 22, and writes the coded memory information created by the data creating/analyzing section 23 as a mail text, thereby creating backup response mail (step S26). The backup response mail is transmitted to the terminal 1 as a sender through the transmitting/receiving section 26 (step S27). Thereafter, the mail creating section 25 creates backup instruction acceptance mail having a header in which intra-header information indicating the acceptance of the backup instruction created by the header creating/analyzing section 22 is written (step S23), and transmits it to a pre-registered notification destination in accordance with the registration information (step S24).

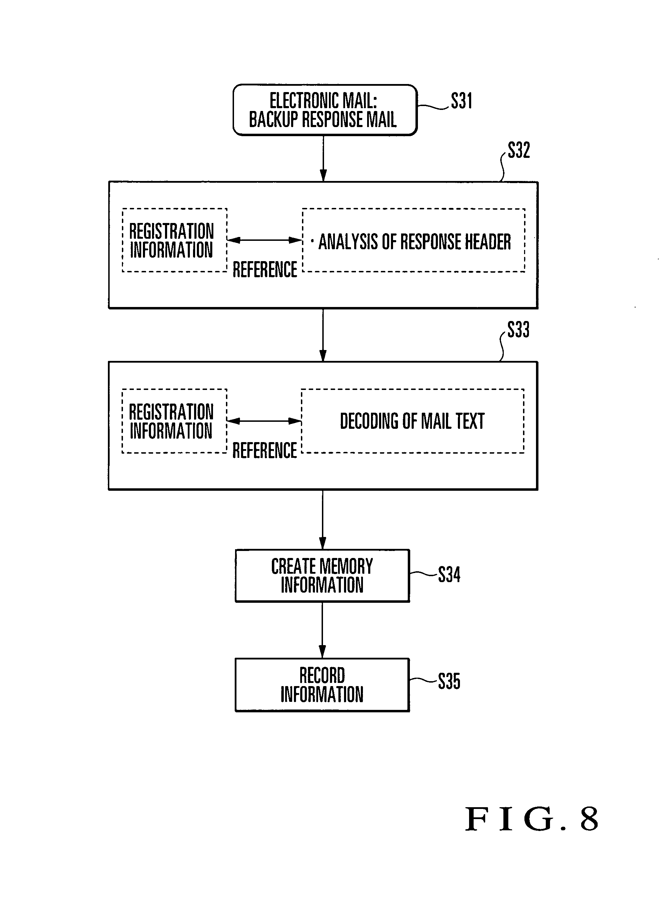

Backup response mail receiving operation of the terminal 1 will be described next with reference to Fig. 8. When the mail accepting section 11 receives electronic mail through the transmitting/receiving section 16 (step S31), the terminal 1 activates the header creating/analyzing section 12 and data creating/analyzing section 13, and requests the header creating/analyzing section 12 to analyze the reception electronic mail. The header creating/analyzing section 12 analyzes the header (response header) of the electronic mail and checks whether or not the mail is backup response mail for the backup instruction requested by the self terminal (step S32).

Upon detecting that the mail is backup response mail, the data creating/analyzing section 13 decodes the mail text (step S33), and creates backup data of the memory information in the cell phone 2 (step S34). The created backup data of the memory information is recorded on the recording section 14 such as a hard disk (step S35). At this time, the data creating/analyzing section 13 also analyzes the header portion of the backup response mail, and performs authentication by checking the validity of the response from the authentication information. With the above operation, backup of the memory information in the cell phone 2 is completed.

### <Restoration of Memory Information>

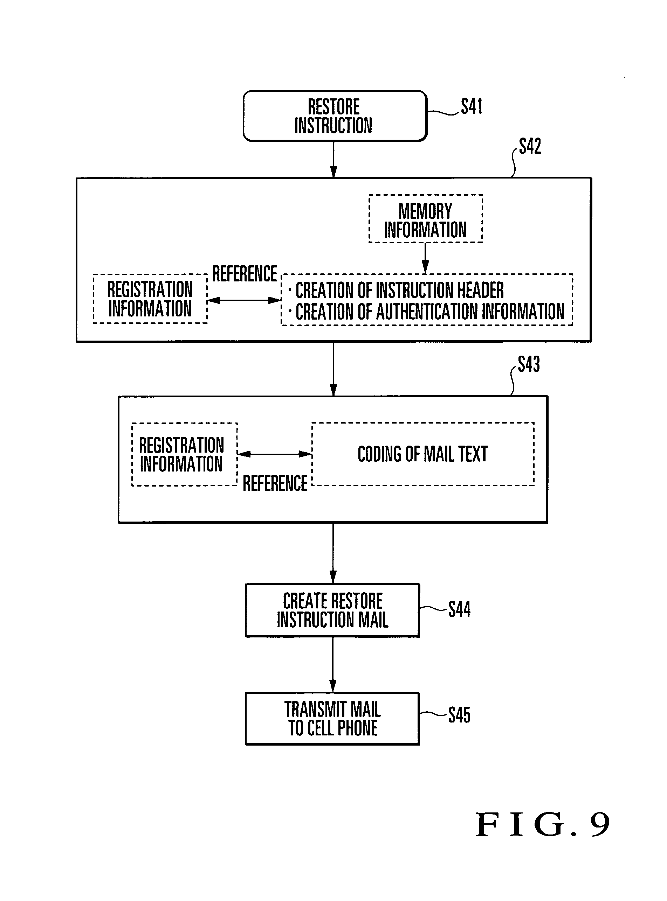

Operation to be performed when the memory information backed up to the terminal 1 is to be restored into the cell phone 2 will be described next with reference to Figs. 9 to 11.

Restore instructing operation of the terminal 1 will be described first with reference to Fig. 9. When the user operates the key input section 10 of the terminal 1 to issue a restore instruction (step S41), the mail accepting section 11 activates the header creating/analyzing section 12 and data creating/analyzing section 13.

The header creating/analyzing section 12 creates information associated with memory information to be restored and authentication information as the intra-header information of restore instruction mail (step S42). The data creating/analyzing section 13 reads out, from the recording section 14, memory information (backup data) to be transmitted to the cell phone 2, and codes the information on the basis of registration information to create a mail text (step S43).

The mail creating section 15 creates restore instruction mail from the intra-header information created by the header creating/analyzing section 12 and the coded mail text created by the data creating/analyzing section 13 (step S44). The restore instruction mail output from the mail creating section 15 is transmitted to the cell phone 2 through the transmitting/receiving section 16 (step S45).

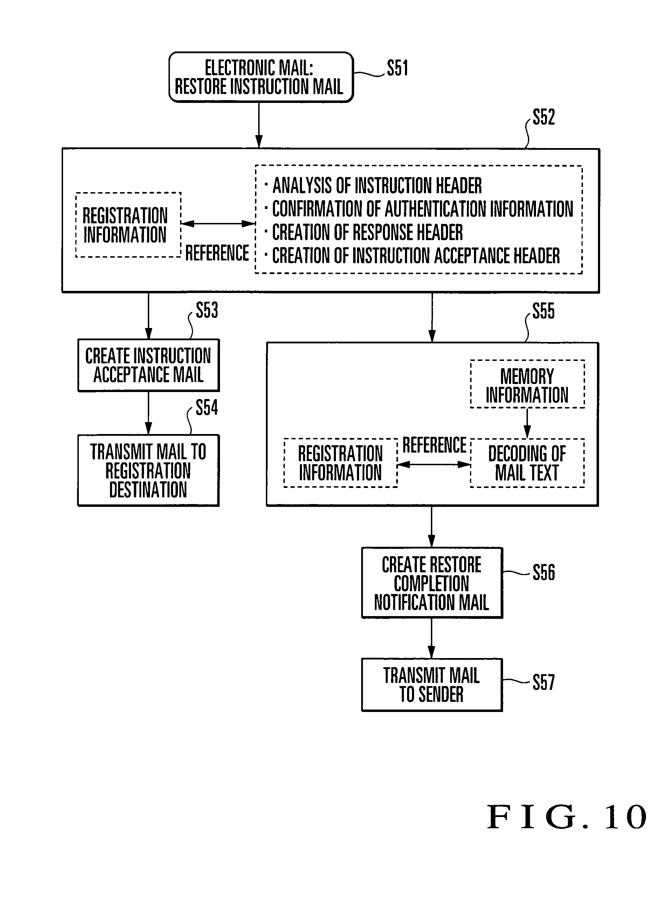

The restore operation of the cell phone 2 will be described next with reference to Fig. 10. Upon receiving electronic mail through the transmitting/receiving section 26 (step S51), the mail accepting section 21 activates the header creating/analyzing section 22 and data creating/analyzing section 23. Upon analyzing the header (instruction header) of the electronic mail and detecting that the mail is restore instruction mail indicating restoration of memory information from the terminal 1, the header creating/analyzing section 22 performs, on the basis of the authentication information, personal identification or the like by checking the validity of the person who has issued the instruction. If no problem is found in the authentication information as a result of the analysis of the header portion, the header creating/analyzing section 22 creates restore completion information (response header) and restore instruction mail acceptance information (instruction acceptance header) as intra-header information of the electronic mail (step S52). The data creating/analyzing section 23 decodes the text of the restore instruction mail on the basis of the registration information and restores the decoded data into the memory section 24 (step S55).

After the received mail test is decoded and restored into the memory, the mail creating section 25 creates restore completion notification mail having a response header for notifying completion of restore from the header creating/analyzing section 22 (step S56), and transmits the mail to the terminal 1 as a sender (step S57). In addition, the mail creating section 25 creates restore instruction acceptance mail having an instruction acceptance header for notifying restore acceptance (step S53), and transmits it to a registered notification destination (step S54).

In the above restore operation, the header creating/analyzing section 22 creates restore completion information (response header) and restore instruction mail acceptance information (instruction acceptance header) before completion of restore. However, these pieces of information may be created after completion of restore. For example, at the time of transmission of each mail, corresponding header information may be created.

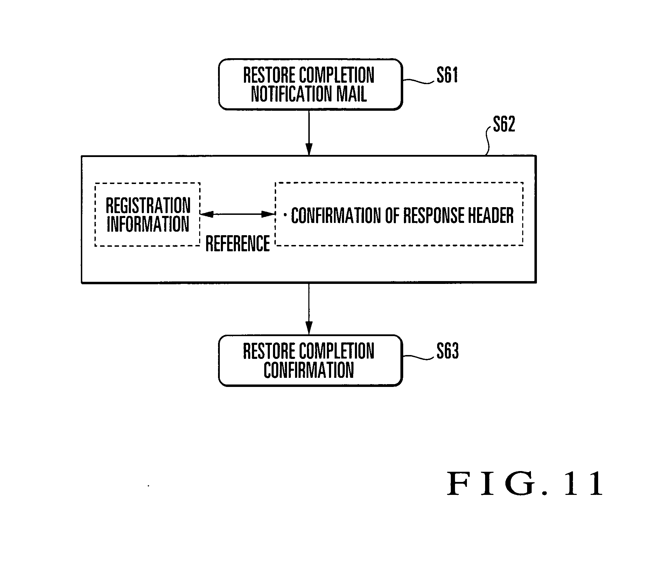

Fig. 11 shows the restore completion notification mail receiving operation of the terminal 1. When the terminal 1 receives restore completion notification mail through the transmitting/receiving section 16 (step S61), the mail accepting section 11 requests the header creating/analyzing section 12 to analyze the restore completion notification mail. The header creating/analyzing section 12 analyzes the header portion of the restore completion notification mail and confirms that the mail is response mail for a restore instruction and memory information has been completely restored (step S63). In addition, the owner of the cell phone confirms completion of restore in accordance with the result displayed on the mail display section 17.

The first embodiment has exemplified the case wherein backup and restore instructions from the terminal 1 are issued by operating the key input section 10. However, such instructions can be automatically issued at set timings by providing a backup scheduling section for the terminal 1.

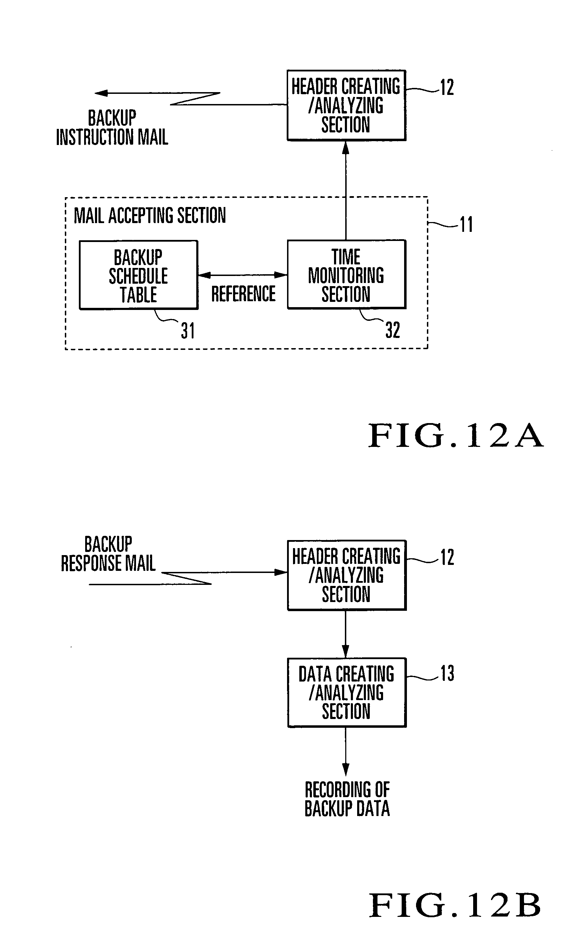

The arrangement of the second embodiment will be described with reference to Figs. 12A and 12B. In this embodiment, as shown in Fig. 12A, in the arrangement of the terminal 1 shown in Fig. 3, a backup schedule table 31 and time monitoring section 32 are newly added into the mail accepting section 11. Note that the backup schedule table 31 and time monitoring section 32 may be provided in place of the mail accepting section 11.

The time monitoring section 32 manages time information and the like. The time monitoring section 32 always monitors the time schedule in the backup schedule table 31, and inputs a backup instruction to a header creating/analyzing section 12 at the time written in the backup schedule table 31. With this operation, backup instruction mail is automatically transmitted to a cell phone 2 at the set time. As shown in Fig. 12B, the terminal 1 receives backup response mail for the backup instruction mail from the cell phone 2, and automatically creates a backup of memory information by using the header creating/analyzing section 12 and a data creating/analyzing section 13.

In this embodiment as well, authentication is performed by transmitting/receiving authentication information in a header portion. Upon accepting backup instruction mail, the cell phone 2 transmits instruction acceptance mail. The owner or the like of the cell phone 2 can automatically monitor the execution of backup of the memory information.

In the above embodiment, with regard to backup instruction acceptance mail/restore instruction acceptance mail associated with backup/restore operation, a backup/restore processing result is transmitted to a pre-registered transmission destination for each backup/restore operation. However, a backup/restore processing result may be transmitted once a predetermined number of times of backup/restore operation or at predetermined time intervals.

In the above embodiment, the functional block portion (Fig. 1) for backup operation is separated from the functional block portion (Fig. 2) for restore operation for the sake of convenience. Obviously, however, this system integrally has the respective functional blocks. The header creating/analyzing sections 12 and 22 shown in Figs. 3 and 4 may be separated into a header creating section and header analyzing section. Likewise, the data creating/analyzing sections 13 and 23 shown in Figs. 3 and 4 may be separated into a data creating section and data analyzing section.

According to the present invention, backup/restoration of the memory information in a cell phone can be executed with safety and ease at an arbitrary time point by transmitting/receiving instruction/response mail between the cell phone and a terminal having an electronic mail transmission/reception function. In addition, information associated with backup instruction mail and restore instruction mail, e.g., the reception and acceptance of backup instruction mail and the transmission, transmission date, and transmission count of backup response mail, is notified to a pre-registered notification destination associated with the owner of the cell phone, thereby monitoring unauthorized use. This makes it possible to backup/restore the memory information in the cell phone with high security. Therefore, the safety and reliability of the system can be maintained.

In addition, since a header portion contains authentication information for the user of a terminal which is personal identification information obtained as a result of computing specific header information according to a predetermined algorithm, different personal identification information is used for transmission of each instruction mail. This makes it possible to construct a backup system with extremely high safety and reliability.

Furthermore, even if, for example, a cell phone is lost or stolen, memory information can be recovered by transmitting instruction mail from the terminal side to the cell phone.

## Claims

1. A backup system which backs up memory information in a cell phone (2) to a terminal (1) by transmitting/receiving electronic mail, **characterized in that**
said terminal comprises instruction mail creating means (1a) for creating, as backup instruction mail, electronic mail having information for instructing to perform backup stored in a header portion, and
backup means (1b, 1c) for analyzing the header portion of the received electronic mail, and when detecting that the mail is backup response mail from said cell phone, decoding a text of the received backup response mail and backing up the text, and
said cell phone comprises response mail creating means (2a) for analyzing the header portion of the received electronic mail, creating, as backup response mail, electronic mail having a text in which the memory information (2b) in said cell phone is coded and written, when detecting that the mail is backup instruction mail from said terminal, and transmitting the mail to said terminal.

2. A system according to claim 1, wherein said cell phone further comprises notification means (2c) for notifying a notification destination associated with an owner of a corresponding cell phone of information associated with backup processing upon completion of backup.

3. A system according to claim 1, wherein
the header portion of the backup instruction mail contains authentication information for a terminal-side user which is personal identification information obtained as a result of computing specific header information according to a predetermined algorithm, and
said cell phone performs personal identification for the user from specific header information and a computation result based on the predetermined algorithm when receiving backup instruction mail.

4. A system according to claim 1, wherein
said terminal includes a backup schedule table (31), and
said instruction mail creating means automatically creates backup instruction mail in accordance with said backup schedule table and transmits the mail to said cell phone.

5. A system according to claim 1, wherein
said terminal further comprises instruction mail creating means (1d) for creating, as restore instruction mail, electronic mail containing a header portion in which information for instructing to restore is stored and a mail text in which memory information to be restored is coded and written, and
said cell phone further comprises restore means (2e) for analyzing a header portion of electronic mail when receiving the mail from said terminal, and when detecting that the mail is restore instruction mail, decoding and restoring the text of the restore instruction mail.

6. A system according to claim 5, wherein said cell phone further comprises notification means (2f) for, after completion of restore, notifying a notification destination associated with an owner of a corresponding cell phone of information associated with restore processing.

7. A system according to claim 5, wherein
the header portion of the restore instruction mail contains authentication information for a terminal-side user which is personal identification information obtained as a result of computing specific header information according to a predetermined algorithm, and
said cell phone performs personal identification for the user from specific header information and a computation result based on the predetermined algorithm when receiving restore instruction mail.

8. A system according to claim 5, further comprising completion notification mail creating means (2f) for creating restore completion notification mail and transmitting the mail to said cell phone upon completion of restore.

9. A backup system which restores memory information in a cell phone (2) from a terminal (1) by transmitting/receiving electronic mail, **characterized in that**
said terminal comprises instruction mail creating means (1d) for creating, as restore instruction mail, electronic mail containing a header portion in which information for instructing to restore is stored and a mail text in which memory information to be restored is coded and written, and
said cell phone comprises restore means (2e) for analyzing the header portion of the electronic mail when receiving the mail from said terminal, and when detecting that the mail is restore instruction mail, decoding and restoring a text of the restore instruction mail.

10. A backup method of backing up memory information in a cell phone (2) to a terminal (1) by transmitting/receiving electronic mail, **characterized by** comprising the steps of:
transmitting, as backup instruction mail from the terminal, electronic mail having a header portion in which information for instructing to perform backup is stored;
causing the cell phone to analyze the header portion of the electronic mail from the terminal;
when detecting that the mail is backup instruction mail, transmitting, from the cell phone to the terminal as backup response mail, electronic mail having a text in which memory information in the cell phone is coded and written;
causing the terminal to analyze the header portion of the electronic mail when receiving the electronic mail from the cell phone; and
when detecting that the mail is backup response mail, decoding and backing up the text of the electronic mail.

11. A method according to claim 10, further comprising the steps of:
transmitting, as restore instruction mail from the terminal, electronic mail containing a header portion in which information for instructing to restore is stored and a mail text in which memory information to be restored is coded and written;
causing the cell phone to analyze the header portion of the electronic mail when receiving the electronic mail from the terminal; and
when detecting that the mail is restore instruction mail, decoding and restoring the text of the electronic mail.

12. A method according to claim 11, further comprising the step of, after completion of backup and restore, causing the cell phone to notify a notification destination associated with an owner of a corresponding cell phone that the memory information has been backed up and restored.

13. A method according to claim 11, wherein
the header portions of the backup instruction mail and restore instruction mail contain authentication information for a terminal-side user which is personal identification information obtained as a result of computing specific header information according to a predetermined algorithm, and
the method further comprises the step of causing the cell phone to perform personal identification for the user from specific header information and a computation result based on the predetermined algorithm when receiving the backup instruction mail and restore instruction mail.

14. A method according to claim 11, further comprising the step of creating restore completion notification mail and transmitting the mail to the cell phone upon completion of restore.
